# EUROPEAN PATENT SPECIFICATION

(11) **EP 2 892 351 B1**
(45) Date of publication and mention of the grant of the patent: **08.08.2018**
(21) Application number: 13774225.0
(22) Date of filing: 04.09.2013
(51) Int. Cl.: A01N 59/16, A01N 59/26, A01P 9/00, A01N 59/02

(54) **BIOAVAILABLE AND PESTICIDAL IRON FORMULATIONS**
BIOVERFÜGBARE UND PESTIZIDE EISENFORMULIERUNGEN
FORMULATIONS DE FER BIODISPONIBLES ET PESTICIDES

(30) Priority: 04.09.2012 GB 201215792
(43) Date of publication of application: 15.07.2015
(73) Proprietor: Ingwermat Limited, Ilkley, West Yorkshire LS29 7QG (GB)
(72) Inventor: WHITELEY, Dr. Geoffrey, Ilkley West Yorkshire LS29 7QG (GB)
(74) Representative: Browne, Robin Forsythe
(86) International application number: PCT/GB2013/052318
(87) International publication number: WO 2014/037719

(56) References cited:
- WO-A1-99/39576
- WO-A1-2012/045682
- "Physical Constants of Inorganic Compounds" In: "Handbook of Chemistry and Physics", 22 June 2012 (2012-06-22), Taylor and Francis, XP055086278, ISBN: 1439880492 pages 4-68, compound 1360; 1396
- H. GALAL-GORCHEV ET AL: "The reaction of ferric iron with ortho-phosphate", JOURNAL OF INORGANIC AND NUCLEAR CHEMISTRY, vol. 25, no. 5, 1 May 1963 (1963-05-01), pages 567-574, XP055086084, ISSN: 0022-1902, DOI: 10.1016/0022-1902(63)80243-2
- DALAS ET AL: "The crystallization of ferric phosphate on cellulose", JOURNAL OF CRYSTAL GROWTH, ELSEVIER, AMSTERDAM, NL, vol. 113, no. 1-2, 1 August 1991 (1991-08-01), pages 140-146, XP024437625, ISSN: 0022-0248, DOI: 10.1016/0022-0248(91)90019-2 [retrieved on 1991-08-01]
- L G Gerasimova ET AL: "Precipitation of Titanium(IV) and Iron(III) Phosphates from Sulfuric Acid Solutions", Russian Journal of Applied Chemistry, 1 November 2003 (2003-11-01), pages 1855-1857, XP055086083, New York DOI: 10.1023/B:RJAC.0000018699.39890.4d Retrieved from the Internet: URL:http://www.ingentaconnect.com/content/ maik/rjac/2003/00000076/00000011/00485305 [retrieved on 2013-10-31]
- "Caffeic Acid Ferric Citrate Test", , 12 March 2012 (2012-03-12), XP055086185, Retrieved from the Internet: URL:http://himedialabs.com/TD/M563.pdf [retrieved on 2013-10-31]
- CHER M: "The kinetics of oxygenation of ferrous ion in phosphoric acid solution", JOURNAL OF THE AMERICAN CHEMICAL SOCIETY, ACS PUBLICATIONS, US, vol. 77, 5 February 1955 (1955-02-05), pages 793-798, XP002101599, ISSN: 0002-7863, DOI: 10.1021/JA01608A086 cited in the application

## Description

The present invention relates to water soluble formulations of iron and phosphate which can be used as either a molluscicide or a mollusc deterrent in the absence of an added metal complexing or chelating agent.

EP1679002A outlines how metal chelates are used as control agents for molluscs (slugs and snails). This description cites the example of U.S. Pat. No. 5,437,870 (Puritch et al.) which discloses an ingestible molluscicide having a carrier (e.g., a bait), a simple iron compound, and ethylene diamine tetracetic acid (EDTA), salts of EDTA, hydroxyethlene triamine diacetic acid, (HEDTA) or salts of HEDTA. U.S. Patent No. 6,352,706 of Puritch also discloses an ingestible molluscicide containing a simple metal compound, an activity enhancing additive such as ethylene diamine disuccinic acid (EDDS) and derivatives thereof, and a carrier material edible to molluscs. Australian Patent Application No. 77420/98 of Young also discloses a stomach-action molluscicide that includes a metal complex iron EDTA and a carrier.

Parker (European Patent EP1679002A) lists suitable organic chelating agents for use in combination with a simple metal salt and ingestible bait to include: aconitic acid, alanine diacetic acid (ADA), alkoyl ethylene diamine triacetic acids (e.g., lauroyl ethylene diamine triacetic acids (LED3A)), aminotri(methylenephosphonic acid) (ATMP), asparticaciddiacetic acid (ASDA), asparticacidmonoacetic acid, diamino cyclohexane tetraacetic acid (CDTA), citraconic acid, citric acid, 1,2-diaminopropanetetraacetic acid (DPTA-OH), 1,3-diamino-2-propanoltetraacetic acid (DTPA), diethanolamine, diethanol glycine (DEG), diethylenetriaminepentaacetie acid (DTPA), diglycolic acid, dipicolinic acid (DPA), ethanolaminediacetic acid, ethanoldiglycine (EDG), ethionine, ethylenediamine (EDA), cthylenediaminediglutaric acid (EDDG), ethylenediaminedi(hydroxyphenylacetic acid (EDDHA), ethylenediaminedipropionic acid (EDDP), ethylenediaminedisuccinate (EDDS), ethylenediaminemonosuccinic acid (EDMS), ethylenediaminetetraacetic acid (EDTA), ethyleneglycolaminoethylestertetraacetic acid (EGTA), gallic acid, glucoheptonic acid, glutamicaciddiacetic acid (GLDA), glutaric acid, gluconic acid, glyceryliminodiacetic acid, glycinamidedisuccinic acid (GADS), glycoletherdiaminetetraacetic acid (GEDTA), 2-hydroxyethyldiacetic acid, hydroxyethylenediaminetriacetic acid (HEDTA), hydroxyethyldiphosphonic acid (HEDP), hydroxyiminodiacetic acid (HIDA), iminodiacetic acid (IDA), iminodisuccinic acid (IDS), itaconic acid, lauroyl ethylene diamine triacetic acids (LED3A), methylglycinediacetate (MGDA), methyliminodiacetic acid (MIDA), monoethanolamine, nitrilotriacetic acid (NTA), nitrilotripropionic acid (NPA), saccharates, salicylic acid, serinediacetic acid (SDA), sorbic acid, succinic acid, tartaric acid, tartronic acid, triethanolamine, triethylenetetraamine, and combinations thereof. Parker considered that preferably, the chelating agent is an ambiopolycarboxylic acid, an amine, an amide, a carboxylic acid, a phosphonic acid and combinations thereof. More preferably, the chelating agent is EDTA, HEDTA, EDDS, HEDP, DTPA and combinations thereof. Other suitable chelating agents listed as being capable of complexing metal ions include, amino acids, such as aspartic acid, glutamic acid, and lysine, as well as proteins, such as whey powder, casein, and albumen. Wirth et al. (WO2012045682) describe a formulation for snail baits comprising organophosphonic acids, metal salts and methiocarb.

Taking into account the extensive teaching and practice of the art of iron phosphate molluscicides cited above, it is notable that an organic complexing agent is considered in the field to be an essential component for efficacy or at least for high potency of iron based molluscicides. The organic chelating agent is considered, in each case cited, necessary to enhance the bioavailability of iron because it is proposed that iron phosphate salts are, as commonly described, 'practically insoluble' in water. Iron (III) phosphate dihydrate FePO₄.2H₂O is typically quoted as having a solubility product of 9.91×10⁻¹⁶ in water at pH 7 and ferric phosphate is quoted as having a solubility in water at pH 7 and 25 °C of 1.86 x 10⁻¹² g/l. The ability to formulate, maintain and deliver substantially elevated concentrations of bioavailable iron in the absence of any of the complexing agents listed above simply by formulating the iron salt in liquid form as a mildly acidified aqueous solution with a pH between 3.0 or less but also up to 6.5 is not obvious and indeed runs counter to the direction of current art in the field of iron phosphate molluscicides.

Although molluscs, including slugs and snails, are important pests not many chemicals have been marketed as molluscicides. The most commonly used include: metaldehyde (first introduced in 1936) and some carbamates such as methiocarb and more recently since the 1990s, iron phosphate plus chelating agents (Edwards et al., Crop Protection 28 (2009) 289-294). There is interest in developing new molluscicides that are safer with respect to use in the environment, to users and handlers of the products in manufacture storage, transport, use and disposal. Edwards *et al.* and others have presented evidence that molluscicides containing iron phosphate and EDTA or EDDS chelating agents may present environmental hazards to earthworms, domestic animals and humans and it is likely that such concerns will become the subject of further examination. For example, ferric phosphate was petitioned for removal from the US National List 205.601(h) of the National Organic Standards Board (Report of the Crops Subcommittee, Petitioned Material Proposal, Ferric Phosphate (to Remove), August 15, 2012). The reason given for the petition being that ferric phosphate cannot be used as an effective molluscide without EDTA, which might therefore be considered an active ingredient rather than an inert ingredient. Delivery of iron as an organic ligand-free liquid formulation of inorganic iron phosphate according to the present invention would therefore be of interest to the industry, and particularly to certain user groups, as an alternative molluscicide which is capable of delivering an effective amount of iron to the absorbing surfaces of the gut epithelia of terrestrial molluscs that does not require EDTA, EDDS or other organic chelating agents to be added to the bait.

Iron-stabilised wheat straw mulches are disclosed in WO9821292 and WO 2006100483. WO9821292 and WO 2006100483 describe methods for treating crop and other plant biomass products with chemically reactive iron for binding to iron binding sites of lignocellulosic biomass to increase microbial stability and retention of structure in composted plant material to yield a brown coloured fibrous particulate physical form.

Dalas Et al.: "The crystallization of ferric phosphate on cellulose", Journal of Crystal Growth, volume 113, no. 1-2, 1 August 1991, pages 140-146 discloses the overgrowth of ferric phosphate in aqueous supersaturated solutions at 25°C, seeded by cellulose fibrils.

According to a first aspect of the invention, use of a composition as a pesticide or pest deterrent, the composition comprises an aqueous solution of a soluble reaction product of an iron salt and phosphoric acid; wherein the reaction product is selected from the group consisting of: ferric phosphate, ferrous phosphate and mixtures thereof.

According to a second aspect of the invention there is provided a method of forming a pesticidal or pest deterrent composition comprising the steps of:
forming an aqueous solution of a reaction product of an iron salt and phosphoric acid;
applying the solution to a substrate;
allowing the solution to be absorbed by the substrate; and
optionally, drying the substrate;
wherein the solution has a pH in the range of 3.0 to 6.5, preferably pH 4.0 to pH 6.5;
wherein the reaction product is selected from the group consisting of ferric phosphate, ferrous phosphate and mixtures thereof.

According to a third aspect of the invention there is provided a pesticidal or pest deterrent composition comprising a substrate, wherein the substrate is a spreadable material formed from an absorbent carrier material to which a composition comprising: an aqueous solution of a soluble reaction product of an iron salt and phosphoric acid has been added so that the composition is absorbed by the substrate;
wherein the reaction product is selected from the group consisting of: ferric phosphate, ferrous phosphate and mixtures thereof;
wherein the solution has a pH in the range of 3.0 to 6.5, preferably pH 4.0 to pH 6.5; and
wherein the spreadable material holds a reservoir of the composition to deter pests on surface contact.

Use of ferric phosphate is particularly advantageous.

The solution may further contain a mineral acid, preferably sulphuric acid.

A preferred oxiding agent is hydrogen peroxide.

The solution of ferrous salt and phosphoric acid preferably has a pH in the range pH1 to pH 7.

The solution may include a gelling or thickening agent.

For use as mollusc deterrent, water soluble formulations of iron phosphate are prepared as a liquid or gel that is applied to the soil or ground surface, to plant containers, or to mulches to inhibit the passage of molluscs in order to deter mollusc trafficking while foraging. The present invention relates specifically to water soluble iron phosphate compositions where aqueous inorganic phosphate complexes of iron are the principal agent responsible for retaining iron bioavailability, thus circumventing the need to have an organic chelating agent present in the composition for efficacy as is taught in the current art for the formulation of iron phosphate molluscicides.

The invention particularly relates to a molluscicidal composition, particularly for treatment of slugs and snails.

Preferred embodiments of the invention are free from chelating agents, especially EDTA.

In a preferred embodiment, the iron phosphate solution may be prepared by mixing a near saturated aqueous solution of ferrous sulphate, for example, food grade ferrous sulphate heptahydrate, and 75% phosphoric acid (food grade) and then diluting these mixtures to a range of dilutions between 1:1 and 1:50 with deionised water to form solutions for application to biomass. In most cases mixing of these ingredients and dilution leads to a spontaneous precipitation of iron phosphates but when slow and non-turbulent dilution is employed, it has been found possible to mix and dilute without any such precipitation taking place. Such stock solutions remain stable for prolonged periods without the precipitation of iron phosphates from solution even when open to atmospheric oxygen and sunlight. Gradual and non-turbulent dilution and a stock solution down to a concentration as low as 10 grams per litre of Fe and to a pH of up to 5.5 has been able to retain stable clear solutions for periods extending from one day to fifty weeks or more at ambient temperature. This was depending on the actual pH, solution composition and environment without causing iron to precipitate as either amorphous iron hydroxide or iron phosphate salt. During such periods the total concentration of Fe in solutions may remain higher, as evidenced by a lack of precipitation of iron phosphate salts than those obtained when dissolving powdered crystalline iron phosphate in water adjusted to the same pH with dilute sulphuric acid. Supersaturated solutions May be obtained. For turbulent mixing in a tank, spontaneous precipitation of iron phosphates most commonly occurred before the pH had risen to 2.5 to 3.0 on dilution of the ferrous sulphate and phosphoric acid mixture.

Diluted solutions prepared in this way may significantly delay the absorption and binding of iron added to wheat straw compared to the rate of such binding when using a comparable solution of ferrous sulphate solution acidified through addition of sulphuric acid or propionic acid. Using this method is was possible to reduce the rate of iron staining colour development by periods of multiple days demonstrating lasting, although still temporary, stability of ionic complexes of iron and phosphate even when challenged with complex ionic environment prevailing in moist wheat straw having a pH as high as 6.3. Iron precipitation will of course take place eventually in diluted solutions.

The capability of using a simple liquid formulation of iron salts with inorganic phosphate that is stable in solution for prolonged periods of time at biologically effective solution concentrations (i.e. multiple orders or magnitude above equivalent published limit of 1.86 x 10⁻¹² g/l for ferric phosphate in water at pH 7) offers up opportunities for delivering bioavailable iron to produce a biological effect. Liquid formulations can be deployed using well established liquid encapsulation technology. This case is contrary to the established teaching in the field that for iron phosphate to be formulated for use in molluscicides it should be incorporated in the form of a powdered solid accompanied by a chelating agent to render it more soluble and bioavailable on ingestion. Providing the bioavailability is sufficient for efficacy the time-limited nature of bioavailability according to the present invention has advantages for the environmental safety and avoidance of off target toxicity in the intended uses of the current patent, and for the manufacture and marketing of iron based molluscicides and mollusc deterrents that do not contain chelating agents.

Without being bound by theory it is the view of the inventor that method of preparation of a concentrated acidic stock solution for subsequent dilution favours the formation ionic species (in the presence of SO₄²⁻, H₂PO₄⁻, HPO₄²⁻, PO₄³⁻) where the phosphate groups act as chelating ligand providers in the hydrated coordination shell of Fe II and Fe III ions which persist dynamically (i.e. transformations between ionic species exhibit variable asymmetric reaction rate constants) through the observed dilution delivery environments (Al-Sogair et al, J. Coord. Chem., 2002, Vol. 55(9), pp. 1097-1109). Speciation of iron in water greatly determines behaviour.

Acidified solutions may be prepared containing ferrous iron, ferric ion and combinations thereof that exhibit toxicity or severe irritation on contact with molluscs. Ferric iron is the preferred form because soluble formulations have been found through trials to be more stable in the outdoor environment where the products are to be used. Moreover, ferric phosphate is the regulatory approved active agent for use as a mollusicide on crops in the EU (EUROPEAN COMMISSION HEALTH & CONSUMER PROTECTION DIRECTORATE-GENERAL Directorate E - Food Safety: E1 - Plant health; Ferric phosphate, SANCO/3035/99-final, 8 March 2002. *Review report for the active substance ferric phosphate, Standing Committee on Plant Health, 29 June 2001 in view of the inclusion offerric phosphate in Annex I of Directive 91*/*414*/*EEC*) and in the USA where ferric phosphate is generally recognized as safe (GRAS) by the Food & Drug Administration. A further limitation of using ferrous iron as the delivery agent in a liquid formulation molluscicide is that Fe II has a tendency to autooxidise in oxygen rich environments forming Fe III aqueous complexes that polymerise and precipitate out of solution as amorphous hydrated iron oxides that are even less soluble than iron phosphate. This was observed in trials where oxygenation the clear green ferrous iron solution became cloudy with a characteristic brown precipitate over time, with corresponding reduction in bioavailability and potency. Once formed amorphous hydrated iron oxides act to remove phosphate ions from solution. Incorporation of phosphate in a formulation as described herein does not prevent auotooxidation of iron II to iron III aqueous species in oxygenated environments (as observed by a transition from a pale green to a clear red/pink coloured solution) but it does prevent polymerisation and precipitation since the iron III complexes formed remain stable in solution and reversibly soluble during evaporation and rewetting cycles of test solutions

The present invention may provide a bioavailable iron composition and method for the control of terrestrial mollusc pests including mollusc species prevalent in agriculture, horticulture and forestry. The active component is preferably a solution containing soluble iron phosphate in a mineral acid solution, such as but not limited to sulphuric and phosphoric acid or combinations thereof and subsequently prepared mixtures of these with compatible ions and pH modifying agents. The composition may have an Fe content between 0.001% and 6% by weight depending on the application. The composition is preferably used as an active agent in an ingestible poison effective to kill molluscs or as contact irritant to deter the passage of molluscs over surfaces to which it has been applied or absorbed.

A relatively concentrated liquid composition of iron phosphate in a dilute mineral acid solution of sulphuric and phosphoric acid which may additionally be buffered as necessary to modify the pH within the range from pH 1 to pH7 and more preferably between pH 3.0 and 6.5 using any compatible alkaline agent such as potassium hydroxide which does not induce spontaneous precipitation, where this liquid composition displays long term stability.

In an embodiment of the invention there is a concentrated liquid composition of iron phosphate in a dilute mineral acid solution of sulphuric and phosphoric acid which may additionally be buffered as necessary to modify the pH within the range preferably between pH 4.5 and 6.5, using any compatible alkaline agent such as potassium hydroxide, which is suitable for forming into gel by addition of one or more gelling or thickening agents to produce a form suitable for spreading on or around plants, onto soil and onto plant pots or other structures in order to deter the passage of molluscs.

In a further embodiment of the invention there is a relatively concentrated liquid composition of iron phosphate in a dilute mineral acid solution of sulphuric and phosphoric acid which may additionally be buffered as necessary to modify the pH within the range pH 1 to pH 7 and preferably between pH 3.0 and 6.5, using any compatible alkaline agent such as potassium hydroxide, which is added to biomass or other biodegradable absorbent material for the manufacture of slug and snail deterrent mulches, mats, strops, containers to deter slugs and snails from feeding on plants.

In a further embodiment of the invention there is pesticidal composition of iron phosphate in a dilute mineral acid solution of sulphuric and phosphoric acid suitable for use in a spray that is effective to kill or deter molluscs upon contact or exposure. The diluted solution may additionally be buffered as necessary to give a desirable mildly acidic pH, preferably between 5.0 and 6.5, using any compatible alkaline agent such as potassium hydroxide and mixed with compatible adjuvents.

Percentages and other amounts referred to in this specification ar by weight unless indicated otherwise and are selected from any ranges quoted to total 100%.

The invention is further described by means of example, but not in any limitative sense.

### PREPARATION OF STOCK SOLUTION

A stock solution was prepared for use as the starting point of the examples as follows: Deionised water was added to 45.7g FeSO₄.7H₂0 and made up to 100g to give a near saturated solution of ferrous sulphate having 25.0 g/100 g of FeSO₄ with an Fe content of 0.2 moles per 100g (9.2 g Fe/100g) as a light green solution with a volume of 76.9 ml and a density of approximately 1.3. Once all the iron sulphate had dissolved 26.1 g (15.5 ml) of 75% phosphoric acid H₃PO₄ was added this being equivalent to 19.6g (0.2 moles) of anhydrous H₃PO₄. Following this 68 g of 10% hydrogen peroxide was added gradually to prevent excessive heating and oxygen release on oxidation of Ferrous to Ferric iron, equivalent to 0.2 moles of H₂O₂, to yield 160.4 ml of a characteristic pink coloured clear stock solution having an Fe content of 57.3 g/litre (5.73% Fe) and a pH in the region of 1.0. Stock solution in this form has been found to be stable for transportation and storage over prolonged periods of 1 year or more.

A cubic meter of reagent was produced in an ICB. The stock solution had an Fe content of 57.3 g/litre (5.73% Fe) and a pH in the region of 1.0.

This stock solution was used in the following examples.

### EXAMPLE 1

Coloured and stabilised mulch was made by mixing an iron sulphate solution into chopped and milled wheat straw. The straw was hammer milled to pass through a 10mm mesh and mixed to 30% water content/w in an augured animal feed mixer to give 6 Kg of Fe per tonne of wheat straw (17% moisture) feedstock with a pH in water of 6.3. The stock solution was diluted 1:5 in water to provide sufficient spray coverage and was spray mixed into the mulch before bagging to add a further 0.35 Kg of Fe per tonne of wheat straw as acidified ferric phosphate solution. This produced a mulch with a pH in water of 5.8 and an increased water extractable Fe content in the straw for several weeks after application to outdoor plots and enhanced deterrence to slug movement in petri dish behaviour tests.

### EXAMPLE 2

Heat stabilised wood mulch was made in a reverse action friction mill in a process that heated the wood to >100°C and sheared open the fibres of Sitka spruce chippings to produce a light fibrous material that was stable and sterile. The stock solution was diluted 1:5 in water to provide sufficient spray coverage and was spray mixed into the mulch before bagging to add a 0.45 Kg of Fe per tonne of wood pulp as acidified ferric phosphate solution. This produced a mulch with a pH in water of 5.5 and an elevated water extractable Fe content in the mulch that was observed 10 weeks after application to outdoor plots and also showing enhanced deterrence to slug movement in petri dish behaviour tests.

### EXAMPLE 3

Mulch mats were made from absorbent brown recycled paper and cardboard (Jiffy Ltd peat free) in the form of a circular band or annular disc for placing around the stems of individual plants in the ground or around the inside edges of plant posts or other containers. The stock solution was diluted 1:2 in water to provide a fine mist spray to moisten but not fully wet the material. The total application of Fe was estimated from before and after weight gain to be 0.6 Kg of Fe per tonne of starting material as acidified ferric phosphate solution. The material was partially dried at 60C in an oven before packing in film. This produced a finished material with a pH in water of 6.3 and an elevated water extractable polymeric content that was observed 10 weeks after storage. The treated material showed enhanced deterrence to slug movement in petri dish behaviour tests immediately after treatment and after 10 weeks storage.

### EXAMPLE 4

Plant pots made from absorbent brown recycled paper and cardboard were purchased from Jiffy Ltd (peat free range) for treatment to deter slugs from climbing over the sides to graze on plants in the pots. The stock solution was diluted 1:2 in water to provide a fine mist spray to moisten but not fully wet the material on the external surface only. The total application of Fe was estimated from before and after weight gain to be 0.6 Kg of Fe per tonne of starting material as acidified ferric phosphate solution but the distribution was not uniform as the spray was applied only onto the external walls. The material was partially dried at 60°C in an oven before packing in polymeric film. This produced a finished material with an average pH in water of 6.3 and an elevated water extractable Fe content that was observed 10 weeks after storage. The treated material showed enhanced deterrence to slug movement in petri dish behaviour tests immediately after treatment and after 10 weeks storage.

### EXAMPLE 5

Slug deterrent mulch was made from wool pellets (Slug Gone 100% Organic Slug Repellent Deterrent Wool Pellets) for treatment to enhance the deterrence offered to slugs and snails passing over the ground on which they had been applied to graze on plants. The stock solution was diluted 1:2 in water with a bio-degradable nonionic wetting and spreading agent (Deluge 1000™) added at 200ml/100 L of spray volume to provide a fine mist spray to moisten but not fully wet the wool pellets. The total application of Fe was estimated from before and after weight gain to be 0.7 Kg of Fe per tonne of starting material as acidified ferric phosphate solution. The material was partially dried at 60C in an oven before packing in polymeric film. This produced a finished material with a pH in water of 6.0 and an elevated water extractable Fe content that was observed 10 weeks after storage. The treated material showed enhanced deterrence to slug movement in petri dish behaviour tests immediately after treatment and after 10 weeks storage.

### EXAMPLE 6

Slug deterrent mulch was made from fine perlite granules (Perlite P6 Extra Fine, Sinclair Ltd) for treatment to enable it to deter slugs and snails passing over the ground on which a layer of the granules had been applied. The stock solution was diluted 1:2 in water with a water retention polyacrylamide gelling agent (Dongying Naxing Trading Co.Ltd) added at a dilution of 2g/100 L of spray volume to provide a drenching spray to moisten but not fully wet the perlite granules. The total application of Fe was estimated from before and after weight gain to be 0.8 Kg of Fe per tonne of starting material as acidified ferric phosphate solution. The material was partially dried at 60°C in an oven before packing in film. This produced a finished material with a pH in water of 5.1 (reduced from pH 6.9 as measured on the untreated perlite) and having an elevated water extractable Fe content that was observed 20weeks after storage. The treated material showed enhanced deterrence to slug movement in petri dish behaviour tests immediately after treatment and after 20 weeks storage.

### EXAMPLE 7 Contact Toxicity and Irritation of Liquid Formulations

Surface contact assays were conducted on individual adult specimens of common grey field slug (*Deroceras reticulatum*) collected from a wheat field and kept in large containers containing moist soil and a supply of fresh leaves for up to 2 days. Five replicate live slugs were selected randomly for each test solution and placed individually in petri dishes on moist filter paper. A narrow tipped dropping pipette was used to deliver a single droplet of test solution onto the external body surface of each slug at a point midway along the upper surface. Average droplet volume from the pipette was determined by weighing to be 5.58 µl. Test solutions were prepared from dilution of stock solution to give a range of iron content, pH and dosage of applied iron as set out in Table 1.

A second set of test solutions were prepared as in Table 1. but with the additional step of partial titration of the solutions prior to final dilution with 0.1M KOH to give the modified the pH values indicated in Table 2. The pH was set in each solution at a lower pH than that required to induce spontaneous precipitation of iron phosphate salts.

Slugs exhibit a pronounced response to attack by predators or contact with irritants consisting of rapid body movement and secretion of profuse quantities of mucilage. When not immobilised, this is typically followed by recoil and rapid movement away from the location. Table 3. shows the numbers exhibiting this response immediately following application of the assay droplet, the numbers recovering mobility within 30 min of application. At 30 min slugs were removed to a fresh Petri dish, leaving most of the secreted mucilage in place, and placed on moist filter paper with a supply or moistened whole wheat flour. The number of slugs surviving was recorded after 24 hours.

Results in Table 3. show that application of 1 µg of Fe in acidified solution is sufficient to produce an irritation response when applied to the upper surface of slugs and that higher application rates of iron are capable of inducing complete immobilisation and mortality. These effects are moderated to a degree but still present where the pH has been raised to a less acidic value.

### EXAMPLE 8 Deterrence to Movement

Deterrence to movement was assessed by direct observation using individual adult specimens of common grey field slug (*Deroceras reticulatum*) collected form a wheat field and kept in large containers containing moist soil and a supply of fresh leaves for up to 2 days.

Three different barrier types were set up using plastic trays of 20 cm x 20 cm as a test arena:
1) Circular strips of filter paper of 1.5 cm width were cut from the outer edges of 12 cm filter paper discs leaving a central opening surrounded by a circular strip of filter paper. Filter papers strips were saturated with test solution and after removing excess solution the strips were placed around the centre of the test tray
2) Test solutions were formed into a gel using food grade oat fibre and a small continuous bead was spread in a circle with a diameter of 12 cm around the centre of the test tray. This tended to flow into a band of less than 1cm width after application.
3) Milled wheat straw meal with a maximum chop length of 5 mm was moistened to approximately 60% by w/w with test solution and formed into a circular mound of 1 cm maximum height and 2 cm width enclosing a central space of approximately 11 cm diameter.

Five replicate live slugs were selected randomly for each test and placed individually in the central open area of the plastic trays. Slug behaviour was observed regularly over 3 hours and the number of slugs successfully crossing the barrier was recorded for each test solution as set out in Tables 4, 5 and 6. Controls solutions consisted of tap water and an equimolar mixture of sulphuric and phosphoric acid.

Results show that acidified solutions of iron phosphate constitute an effective barrier to slug movement when applied to a porous surface, applied on the surface as a band of gel and when incorporated into a biomass material such as wheat straw that is spread on the surface. At the higher concentration of Fe, movement towards the barrier by extension of the head was followed by immediate recoil and more often with the gels this was followed by partial immobilisation and mucilage release. In most cases where there was an immediate recoil reaction on first contact, slugs made no further attempts to cross the barrier in the remainder of the three hour period.

### EXAMPLE 9 Toxicity in Feeding Trials

Toxicity in feeding trials was assessed by recording mortality and survival of juvenile specimens of common grey field slug (Deroceras reticulatum) collected from a wheat field and recorded over 4 days. Groups of 10 juvenile slugs of between 1.8 and 2.8 cm in length were selected and placed onto a layer of moist fabric in plastic trays of 20 cm x 20 cm and presented with an ample supply of test food granules prepared as follows:
Test solutions were added to a fine jet atomiser spray bottle and spayed lightly onto the surface of a shallow layer of finely powdered dry food composite (Ingredients: Maltodextrin, Inulin, Pea Fiber, Citrus Pectin, Apple Pectin, Orage Fiber, Beet Fiber. Arbonne Daily Fiber Boost, by Arbonne International, LLC). After 20 minutes resting to allow for droplet adsorption, an air jet was used to disperse un-wetted powder leaving wetted aggregates adhering to the underlying Teflon surface. Aggregates were spray coated in liquid coconut oil at 35 C, agitated and deposited onto a new layer of dry food composite and allowed to cool to 10 C for the oil to harden. Resulting aggregates were passed through a 2 mm mesh sieve and dusted with further food composite before adding to the trays containing test slugs where they were moistened with a deionised water spray. The aim was to produce edible granules with a wetted core disguised from detection during first ingestion by encasement in a thin layer of coconut oil and food composite. Test solution was estimated to make up 20-26% by weight of aggregates before final wetting in the trays.

Significant mortality was observed after 4 days following ingestion of granules containing acidified iron phosphate solution.

| Table 1. Fe content and pH of diluted stock solutions and total iron content of a 5.58 µl droplet applied to each slug in the assay. | | | | |
|---|---|---|---|---|
| Dilution | Fe (g/l) | pH | Fe applied mg | Fe applied µg |
| none | 57.300 | 1.0 | 0.319463261 | 319 |
| x2 | 28.700 | 1.2 | 0.15973163 | 160 |
| x5 | 11.500 | 1.3 | 0.063892652 | 64 |
| x10 | 5.734 | 1.5 | 0.031946326 | 32 |
| x50 | 1.147 | 2.0 | 0.006389265 | 6 |
| x100 | 0.573 | 2.2 | 0.003194633 | 3 |
| x1000 | 0.057 | 2.6 | 0.000319463 | 0.3 |
| x5000 | 0.011 | 3.0 | 0.000063892 | 0.06 |

| Table 2. Fe content and pH of pH modified stock solutions and total iron content of a 5.58 µl droplet applied to each slug in the assay. | | | | |
|---|---|---|---|---|
| Dilution | Fe (g/l) | pH | Fe applied mg | Fe applied µg |
| x10 | 5.734 | 3.0 | 0.031946326 | 32 |
| x50 | 1.147 | 3.5 | 0.006389265 | 6 |
| x100 | 0.573 | 5.0 | 0.003194633 | 3 |
| x1000 | 0.057 | 5.5 | 0.000319463 | 0.3 |
| x5000 | 0.011 | 5.5 | 0.000063892 | 0.06 |

| Table 3. Surface contact assays results for 5 replicate *Deroceras reticulatum* following application of a single 5.58 µl droplet of test solution. | | | | |
|---|---|---|---|---|
| Fe applied µg | pH | Number exhibiting immediate shock response | Number recovering mobility within 30 min of application | Number surviving at 24 hours after application |
| 319 | 1.0 | 5 | 0 | 0 |
| 160 | 1.2 | 5 | 0 | 0 |
| 64 | 1.3 | 5 | 0 | 0 |
| 32 | 1.5 | 5 | 0 | 0 |
| 6 | 2.0 | 5 | 0 | 0 |
| 3 | 2.2 | 5 | 2 | 0 |
| 0.3 | 2.6 | 5 | 2 | 2 |
| 0.06 | 3.0 | 5 | 5 | 3 |
| 32 | 3.0 | 5 | 0 | 0 |
| 6 | 3.5 | 5 | 0 | 0 |
| 3 | 5.0 | 5 | 2 | 0 |
| 0.3 | 5.5 | 5 | 4 | 4 |
| 0.06 | 5.5 | 5 | 5 | 5 |

| Table 4 Deterrence to movement results for 5 replicate *Deroceras reticulatum* presented by a 1.5 cm barrier of filter paper saturated with test solution. | | | | |
|---|---|---|---|---|
| Fe content of test solution g/l | pH of test solution | Number exhibiting immediate recoil on first contact | Number mounting barrier but abandoning crossing | Number successfully breaching barrier in 3 hours |
| 3 | 2.2 | 5 | 0 | 0 |
| 0.3 | 2.6 | 5 | 2 | 0 |
| 3 | 5.0 | 5 | 0 | 0 |
| 0.3 | 5.5 | 3 | 4 | 0 |
| Control - 0 | 6.6 | 0 | 0 | 5 |
| Control - 0 | 3.0 | 0 | 4 | 4 |

| Table 5 Deterrence to movement results for 5 replicate *Deroceras reticulatum* presented by a 1.5 cm barrier of oat gel with test solution. | | | | |
|---|---|---|---|---|
| Fe content of test solution g/l | pH of test solution | Number exhibiting immediate recoil on first contact | Number mounting barrier but abandoning crossing | Number successfully breaching barrier in 3 hours |
| 3 | 2.2 | 5 | 0 | 0 |
| 0.3 | 2.6 | 5 | 0 | 0 |
| 3 | 5.0 | 5 | 0 | 0 |
| 0.3 | 5.5 | 5 | 1 | 0 |
| Control - 0 | 6.6 | 0 | 0 | 5 |
| Control - 0 | 3.0 | 1 | 3 | 2 |

| Table 6 Deterrence to movement results for 5 replicate *Deroceras reticulatum* presented by a 1.5 cm barrier of wheat straw meal moistened with test solution. | | | | |
|---|---|---|---|---|
| Fe content of test solution g/l | pH of test solution | Number exhibiting immediate recoil on first contact | Number mounting barrier but abandoning crossing | Number successfully breaching barrier in 3 hours |
| 3 | 2.2 | 5 | 0 | 0 |
| 0.3 | 2.6 | 5 | 0 | 0 |
| 3 | 5.0 | 3 | 3 | 0 |
| 0.3 | 5.5 | 2 | 4 | 1 |
| Control - 0 | 6.6 | 0 | 0 | 5 |
| Control - 0 | 3.0 | 0 | 3 | 5 |

| Table 7Deterrence to movement results for 10 replicate juvenile *Deroceras reticulatum* presented with a diet of wheat flour granules with a core moistened with test solution. | | | | |
|---|---|---|---|---|
| Fe content of test solution g/l | Number surviving 1 day after introduction | Number surviving 2 days after introduction | Number surviving 3 days after introduction | Number surviving 4 days after introduction |
| 11.3 | 8 | 6 | 4 | 2 |
| 0 (Control deionised water) | 10 | 9 | 9 | 7 |
| 0 (Control solution acidified to pH 3) | 10 | 10 | 8 | 5 |

## Claims

1. Use of a composition as a pesticide or pest deterrent, the composition comprising an aqueous solution of a soluble reaction product of an iron salt and phosphoric acid; wherein the reaction product is selected from the group consisting of: ferric phosphate, ferrous phosphate and mixtures thereof.

2. Use of a composition as claimed in claim 2, wherein the reaction product is ferric phosphate.

3. Use of a composition as claimed in any preceding claim, further containing a mineral acid.

4. Use of a composition as claimed in claim 3, wherein the mineral acid is sulphuric acid.

5. Use of a composition as claimed in any preceding claim, wherein the solution has a pH in the range of 3.0 to 6.5, preferably pH 4.0 to pH 6.5.

6. Use of a composition as claimed in any preceding claim, further comprising a thickening or gelling agent.

7. A method of forming a pesticidal or pest deterrent composition comprising the steps of:
forming an aqueous solution of a reaction product of an iron salt and phosphoric acid;
applying the solution to a substrate;
allowing the solution to be absorbed by the substrate; and
optionally, drying the substrate;
wherein the solution has a pH in the range of 3.0 to 6.5, preferably pH 4.0 to pH 6.5;
wherein the reaction product is selected from the group consisting of ferric phosphate, ferrous phosphate and mixtures thereof.

8. A method as claimed in claim 7, wherein the reaction product is ferric phosphate.

9. A method as claimed in any of claims 7 or 8, wherein the solution further comprises a mineral acid.

10. A method as claimed in any of claims 7 to 9, wherein the solution includes a gelling agent or thickening agent.

11. A pesticidal or pest deterrent composition comprising a substrate, wherein the substrate is a spreadable material formed from an absorbent carrier material to which a composition comprising: an aqueous solution of a soluble reaction product of an iron salt and phosphoric acid has been added so that the composition is absorbed by the substrate;
wherein the reaction product is selected from the group consisting of: ferric phosphate, ferrous phosphate and mixtures thereof;
wherein the solution has a pH in the range of 3.0 to 6.5, preferably pH 4.0 to pH 6.5; and
wherein the spreadable material holds a reservoir of the composition to deter pests on surface contact.

12. A composition as claimed in claim 11, wherein the composition comprises 0.1 to 5 wt% Fe.

13. A composition as claimed in any of claims 11 or 12, wherein the absorbent material comprises biodegradable plant biomass material.

14. A composition as claimed in claim 13, wherein the biomass material is selected from the group consisting of: crop straw derived from: wheat, maize, rice, barley, oat, sugar cane and mixtures thereof.

## Patentansprüche

1. Verwendung einer Zusammensetzung (Formulierung) als Pestizid oder Schädlingsabwehr, welche Zusammensetzung eine wässrige Lösung eines löslichen Reaktionsproduktes eines Eisensalzes und Phosphorsäure umfasst; wobei das Reaktionsprodukt aus der Gruppe bestehend aus: Eisen(III)-Phosphaten, Eisen(II)-Phosphaten und Gemischen derselben, ausgewählt ist.

2. Verwendung einer Zusammensetzung nach Anspruch 1, wobei das Reaktionsprodukt Eisen(III)-Phosphat ist.

3. Verwendung einer Zusammensetzung nach einem der vorgehende Ansprüche, welche ausserdem eine Mineralsäure beinhaltet.

4. Verwendung einer Zusammensetzung nach Anspruch 3, wobei die Mineralsäure Schwefelsäure ist.

5. Verwendung einer Zusammensetzung nach einem der vorgehenden Ansprüche, wobei die Lösung einen pH im Bereich von 3.0 bis 6.5, vorzugsweise von pH 4.0 bis pH 6.5 aufweist.

6. Verwendung einer Zusammensetzung nach einem der vorgehenden Ansprüche, welche Zusammensetzung weiter einen verdickenden oder gelierenden Wirkstoff umfasst.

7. Verfahren zur Herstellung einer pestiziden oder schädlingsabwehrenden Zusammensetzung umfassend folgende Schritte:
Herstellen einer wässrigen Lösung eines Reaktionsproduktes eines Eisensalzes und Phosphorsäure;
Auftragen der Lösung auf ein Substrat;
die Lösung vom Substrat absorbieren lassen; und
optional, Trocknen des Substrats;
wobei die Lösung einen pH im Bereich von 3.0 bis 6.5, vorzugsweise einen pH 4.0 bis pH 6.5 aufweist;
wobei das Reaktionsprodukt gewählt ist aus der Gruppe bestehend aus: Eisen(III)-Phosphat, Eisen(II)-Phosphat und Gemischen derselben.

8. Verfahren nach Anspruch 7, wobei das Reaktionsprodukt Eisen(III)-Phosphat ist.

9. Verfahren nach einem der Ansprüche 7 oder 8, wobei die Lösung ausserdem eine Mineralsäure umfasst.

10. Verfahren nach einem der Ansprüche 7 bis 9, wobei die Lösung einen gelierenden Wirkstoff oder verdickenden Wirkstoff beinhaltet.

11. Eine pestizide oder schädlingsabwehrende Zusammensetzung, welche ein Substrat umfasst,
wobei das Substrat ein streufähiges Material ist, welches aus einem absorbierenden Material hergestellt ist, dem eine Zusammensetzung, welche eine wässrige Lösung eines löslichen Reaktionsproduktes eines Eisensalzes und Phosphorsäure umfasst, zugefügt worden ist, derart, dass die Zusammensetzung vom Substrat absorbiert ist;
wobei das Reaktionsprodukt gewählt ist aus der Gruppe bestehend aus: Eisen(III)-Phosphat, Eisen(II)-Phosphat und Gemischen derselben;
wobei die Lösung einen pH im Bereich von 3.0 bis 6.5, vorzugsweise einen pH 4.0 bis pH 6.5 aufweist;
und
wobei das streufähige Material ein Reservoir der Zusammensetzung birgt, um Schädlinge bei Oberflächenkontakt abzuwehren.

12. Zusammensetzung nach Anspruch 11, wobei die Zusammensetzung 0.1 bis 5 Gew.% Eisen enthält.

13. Zusammensetzung nach einem der Ansprüche 11 oder 12, wobei das absorbierende Material biologisch abbaubares, pflanzliches Biomasse-Material umfasst.

14. Zusammensetzung nach Anspruch 13, wobei das Biomasse-Material aus der Gruppe gewählt ist, welche Getreidestroh umfasst, welches aus: Weizen, Mais, Reis, Gerste, Hafer, Zuckerrohr und Gemischen davon, gewonnen ist.

## Revendications

1. Utilisation d'une composition comme pesticide ou comme défense contre des nuisibles, la composition comprenant une solution aqueuse d'un produit de réaction soluble d'un sel de fer avec de l'acide phosphorique, selon laquelle le produit de réaction est choisi dans le groupe consistant en le phosphate ferrique, le phosphate ferreux, et des mélanges de ceux-ci.

2. Utilisation d'une composition selon la revendication 1, selon laquelle le produit de réaction est le phosphate ferrique.

3. Utilisation d'une composition selon l'une quelconque des revendications précédentes, comprenant en outre un acide minéral.

4. Utilisation d'une composition selon la revendication 3, selon laquelle l'acide minéral est de l'acide sulfurique.

5. Utilisation d'une composition selon l'une quelconque des revendications précédentes, selon laquelle la solution présente un pH se situant dans la plage de 3,0 à 6,5, de préférence entre pH 4,0 et pH 6,5.

6. Utilisation d'une composition selon l'une quelconque des revendications précédentes, comprenant en outre un agent épaississant ou un agent gélifiant.

7. Procédé de production d'une composition pesticide ou de défense contre des nuisibles, comprenant les étapes de :
production d'une solution aqueuse d'un produit de réaction d'un sel de fer et d'acide phosphorique ;
application de la solution à un substrat ;
absorption de la solution par le substrat ; et
optionnellement, séchage du substrat ;
selon lequel la solution présente un pH se situant dans la plage de 3,0 à 6,5, de préférence entre pH 4,0 et pH 6,5 ;
selon lequel le produit de réaction est choisi dans le groupe consistant en le phosphate ferrique, le phosphate ferreux, et des mélanges de ceux-ci.

8. Procédé selon la revendication 7, selon lequel le produit de réaction est le phosphate ferrique.

9. Procédé selon la revendication 7 ou la revendication 8, selon lequel la solution comprend en outre un acide minéral.

10. Procédé selon l'une quelconque des revendications 7 à 9, selon lequel la solution comporte un agent épaississant ou un agent gélifiant.

11. Composition pesticide ou de défense contre les nuisibles comprenant un substrat, selon lequel le substrat se présente sous forme de matériau à étaler formé à partir d'un matériau support absorbant, auquel a été ajoutée une composition comprenant une solution aqueuse d'un produit de réaction soluble d'un sel de fer avec de l'acide phosphorique, de telle sorte que la composition est absorbée par le substrat ;
selon laquelle le produit de réaction est choisi dans le groupe consistant en le phosphate ferrique, le phosphate ferreux, et des mélanges de ceux-ci ;
selon laquelle la solution présente un pH se situant dans la plage de 3,0 à 6,5, de préférence entre pH 4,0 et pH 6,5 ; et
selon laquelle le matériau à étaler comporte un réservoir de la solution afin de repousser les nuisibles au contact de la surface.

12. Composition selon la revendication 11, selon laquelle la composition comprend de 0,1 % en poids à 5 % en poids de fer.

13. Composition selon la revendication 11 ou la revendication 12, selon laquelle le matériau absorbant comprend du matériau biodégradable de biomasse végétale.

14. Composition selon la revendication 13, selon laquelle le matériau de biomasse est choisi dans le groupe consistant en de la paille de céréales dérivée de blé, de maïs, de riz, d'orge, d'avoine, de canne à sucre et de mélanges de ceux-ci.
